# EUROPEAN PATENT SPECIFICATION

(11) **EP 3 769 932 B1**
(45) Date of publication and mention of the grant of the patent: **15.02.2023**
(21) Application number: 19187889.1
(22) Date of filing: 23.07.2019
(51) Int. Cl.: B29C 48/40, C08G 18/28, C08G 18/32, C09J 175/02, B29C 48/00, B29C 48/405, B29C 48/37, B29C 48/43, B29C 48/44, B29C 48/92, C08G 18/08, C08G 18/10, C08G 18/76

(54) **MOISTURE-CURABLE ADHESIVE COMPOSITIONS**
FEUCHTIGKEITSHÄRTBARE KLEBSTOFFZUSAMMENSETZUNGEN
COMPOSITIONS ADHÉSIVES DURCISSABLES À L'HUMIDITÉ

(43) Date of publication of application: 27.01.2021
(73) Proprietor: 3M Innovative Properties Company, Saint Paul, MN 55133-3427 (US)
(72) Inventor: Goubard, Mr. David, 67500 Haguenau (FR); Stegel, Ms. Bérénice, 67500 Haguenau (FR); Schmitt, Mr. Eric, 67500 Haguenau (FR)
(74) Representative: Vossius & Partner Patentanwälte Rechtsanwälte mbB

(56) References cited:
- WO-A1-2017/165221
- WO-A1-2018/108655
- JP-A- H0 336 015

## Description

### Technical Field

The present disclosure relates generally to the field of adhesives and sealants, more specifically to the field of moisture-curable adhesive compositions.

### Background

Moisture-curable adhesive compositions have been used for years as adhesive and sealants in particular for construction and industrial market applications. One typical production method for moisture-curable adhesive compositions involves a batch-wise process, whereby the reactants and reagents are introduced, either manually or through an automated system, into a high-intensity batch mixer. According to a first approach, it is made use of a two-step process using a moisture-curable prepolymer. In a first step, the main reactants for forming the prepolymer are pre-mixed in the desired ratio, optionally with several other ingredients, so as to form the prepolymer. In a second step, the prepolymer is mixed with the remaining reactants and reagents to achieve the final formulation. The prepolymer is typically formulated so that it can be used in various finished formulations. As a result, while both productions steps may occur in the same mixer, often a large quantity of the prepolymer is manufactured in a reactor for the first step and then transferred to one or more secondary mixers to make various finished batches. According to an alternative approach, a one-step manufacturing approach may be used, whereby all the reactants and reagents are sequentially introduced, either manually or through an automated system, into a single high-intensity batch mixer. In this approach, the order of addition of the various ingredients is crucial to control the finished product quality, and the finished formulation is typically transferred as such into the final packaging.

The batch-wise processes known in the art typically require stringent process requirements, including high-energy mixing, control of process careful of process conditions (in particular thermal and pressure management), and in particular means for preventing premature exposure to moisture and water (such as e.g. vacuum or chemical desiccation). In addition, the batch manufacturing approach is typically associated with various productivity limitations, such as e.g. waste production, intensive cleaning operations, in-line product quality testing, throughout limitations, complex equipment and safety issues management. All the limitations and stringent requirements detailed above make the use of batch-wise manufacturing processes inefficient and unattractive in various aspects.

In view of the above-detailed deficiencies associated with the batch manufacturing approach, alternative manufacturing processes such as continuous processes for the manufacturing of moisture-curable adhesive compositions have emerged as one approach to reduce these limitations. Exemplary continuous processes for the manufacturing of moisture-curable adhesive compositions are described e.g. in US Pat. No. 5,621,024 (Eberhardt et al.), in US Pat. No. 5,795,948 (Heidingsfeld et al.), and in US Pat. No. 5,905,133 (Müller et al.).

WO 2018/108655 A1 discloses a two-component composition comprising A) an isocyanate component comprising an isocyanate-terminated urethane prepolymer, B) a water component comprising water, and at least one latent amine hardener in component A).

WO 2017/165221 A1 discloses a thermoplastic polyurethane-urea elastomer comprising the reaction product of: (1) a polyol component; (2) an isocyanate component; and (3) a chain extender component, said chain extender component comprising hindered aromatic diamine, wherein the composition is made in a one-shot reaction process without using solvent in a continuous reactive extrusion.

Without contesting the technical advantages associated with the moisture-curable adhesive compositions known in the art, there is still a need for a robust, simple and cost-effective process of manufacturing a moisture-curable adhesive composition provided with excellent and versatile characteristics as to thixotropic and rheological properties.

### Summary

The present invention relates to a process of manufacturing a moisture-curable adhesive composition, wherein the process comprises the steps of:
a) providing a multi-screw extruder comprising a reaction chamber;
b) providing reactants and reagents comprising:
   i. at least one isocyanate;
   ii. at least one amine; and
   iii. optionally, at least one plasticizer;
c) incorporating the reactants and reagents into the reaction chamber of the multi-screw extruder, thereby forming a reaction product comprising a urea derivative; and
d) incorporating at least one moisture-curable prepolymer into the reaction product resulting from step c), thereby forming a moisture-curable adhesive composition.

A moisture-curable adhesive composition is obtainable by the process as described above.

The composition as described above
can be used for industrial applications, in particular for transportation market applications, more in particular automotive, marine, rail and aerospace applications, or for construction market applications.

### Detailed description

The present invention relates to a process of manufacturing a moisture-curable adhesive composition, wherein the process comprises the steps of:
a) providing a multi-screw extruder comprising a reaction chamber;
b) providing reactants and reagents comprising:
   i. at least one isocyanate;
   ii. at least one amine; and
   iii. optionally, at least one plasticizer;
c) incorporating the reactants and reagents into the reaction chamber of the multi-screw extruder, thereby forming a reaction product comprising a urea derivative; and
d) incorporating at least one moisture-curable prepolymer into the reaction product resulting from step c), thereby forming a moisture-curable adhesive composition.

In the context of the present disclosure, it has surprisingly been found that a process of manufacturing a moisture-curable adhesive composition as described above allows producing moisture-curable adhesive compositions provided with excellent and versatile characteristics as to rheo-thinning and other rheological properties (e.g. thixotropy), in particular with respect to extrusion rate, as well as sag and stringing resistance properties. The moisture-curable adhesive compositions directly resulting from the process of the present disclosure are in particular characterized by an optimal balance of extrusion rate and sag resistance properties.

The moisture-curable adhesive composition obtained by the process as described above is further characterized by any one of the following advantageous properties: excellent shelf life and storage stability, broad formulation flexibility, reduced product quality variability, reduced overall volatile organic compounds (VOC) content and reduced sensitivity to humidity.

The process of manufacturing a moisture-curable adhesive composition as described above is further characterized by any one of the following advantageous properties: continuous process using a single mixing and reacting equipment; use of regular and commonly available multi-screw extruder, reduced exposure of the various reactants and reagents to moisture, reduced exposure of the operators to hazardous material, reduced processing operations (in particular, maintenance, cleaning, loading and moving operations by manual operators), improved formulation flexibility, and enhanced production throughput.

Without wishing to be bound by theory, it is believed that this outstanding set of advantageous properties is directly derived from the process and the particular sequence of steps as described above. More particularly, it is believed that the particular step of forming a reaction product comprising a urea derivative by a so-called reactive extrusion step involving the step of incorporating reactants and reagents comprising at least one isocyanate and at least one amine into the reaction chamber of the multi-screw extruder, plays a determining role in obtaining these advantageous properties.

The urea derivative which is formed in-situ by reactive extrusion, formally acts as a thixotropic and rheo-thinning agent for the moisture-curable adhesive composition of the present disclosure, thereby helping the composition achieving, in particular, its excellent and versatile rheological properties. Advantageously, this particular process step allows producing moisture-curable adhesive compositions provided with relatively high viscosity, in particular having a viscosity up to 10.000 Pa.s, when measured at 23°C with a rheometer in a shear flow mode at 0.1 s⁻¹. The in-situ formation of the urea derivative by reactive extrusion is further characterized by any one of the following advantageous properties: excellent formulation flexibility of the urea derivative, high chemical conversion of the initial reactants, excellent (high-)viscosity management, reduced exposure to humidity, excellent thermal management, and improved fine-tuning of the final composition properties.

Similarly, the particular step of incorporating at least one already-formed moisture-curable prepolymer into the reaction product comprising the urea derivative is also believed to play a decisive role in obtaining the advantageous properties detailed above. Incorporating an already-formed moisture-curable prepolymer not only reduces the complexity associated with the manufacturing of these prepolymers in multi-screw extruders, but also allows expanding the formulation flexibility and therefore fine-tuning the final adhesive formulation properties according to the intended application. Moreover, the step of incorporating the at least one moisture-curable prepolymer into the reaction product comprising the urea derivative acting as thixotropic agent is believed to advantageously affect not only the overall processing operations but also the ability to provide the moisture-curable adhesive composition with the beneficial properties as detailed above.

The moisture-curable adhesive compositions obtained by the process of the present disclosure are particularly suitable for the construction market applications, in particular for building, jointing or bonding various substrates such as e.g. facades. The moisture-curable adhesive compositions described herein are also suitable for industrial applications, in particular for construction and transportation market applications, more in particular automotive, naval, rail and aerospace applications. As such, the moisture-curable adhesive compositions according to the present disclosure are particularly suited for the manufacture of sandwich panels in the construction industry, and for windshield bonding in the automotive industry.

In the context of the present disclosure, the term "reaction chamber" is meant to refer to a closed region or area of the multi-screw extruder, comprising the multiple screws and where separate incoming addition streams are combined and contact one another. The reactants of the addition streams mix and chemically react with one another thereby forming a reaction product stream, where one or the other of the reactants may surround the other. The reaction chamber may contain several segments, each operating at the same or different working conditions, such as mixing and temperature regimes. Each segment may provide suitable addition ports for the various addition streams.

The term "addition stream" is meant to refer to reactants and reagents (such as e.g. the isocyanate, the amine or the moisture-curable prepolymer) flowing from an entry location to the reaction chamber of the multi-screw extruder.

The term "residence time" is meant to refer to the period of time the reaction product stream remains in the reaction chamber of the multi-screw extruder from the moment the reactants and reagents, are incorporated and mixed into the reaction chamber of the multi-screw extruder until the moment the reaction product stream exits the reaction chamber.

The process of the present disclosure comprises the step of providing a multi-screw extruder comprising a reaction chamber.

Multi-screw extruders for use herein are not particularly limited. Any multi-screw extruder comprising a reaction chamber commonly known in the art may be used in the context of the present disclosure. Suitable multi-screw extruders for use herein will be easily identified by those skilled in the art, in the light of the present description.

Moreover, multi-screw screw extrusion methods and devices have been well catalogued in recent publications such as in *"*Twin Screw Extrusion: Technology and Principles (2nd Ed.), James L. White and Eung K. Kim, Carl Hanser Verlag, Munich 2010", in *"*Co-rotating Twin-Screw Extruders: Fundamentals, Technology and Applications, Klemens Kohlgruber and Werner Wiedmann, Hanser, Munich 2008" or in *"*Reactive Extrusion: Principles and Applications, Günter Beyer and Christian Hopmann, Wiley-VCH, Weinheim 2017". One suitable multi-screw extruder is commercially available, for example, under the trade designation PROCESS 11 PARALLEL TWIN-SCREW EXTRUDER (Thermo Fischer Scientific, Germany).

In a particular aspect of the present disclosure, the multi-screw extruder for use herein is selected from the group of twin-screw extruders, planetary roller extruders, and ring extruders. In that respect, the multi-screw extruder for use herein may be a co-rotating multi-screw extruder or a counter-rotating multi-screw extruder.

In one preferred aspect, the multi-screw extruder for use in the process according to the disclosure is a twin-screw extruder, in particular a co-rotating twin-screw extruder.

In an alternative execution, the multi-screw extruder for use herein is a planetary roller extruder comprising in particular a center spindle and multiple planetary gear spindles with center spindle and planetary gear spindles featuring a screw like geometry.

Selecting and fine-tuning the various operating parameters of the multi-screw extruder to the specifics of the targeted chemical reactions, is well within the capabilities of those skilled in the art. These operating parameters will typically be adapted, in particular, to the nature of the starting materials and the properties of the targeted moisture-curable adhesive composition.

In one exemplary aspect, the multi-screw extruder is operated at a screw speed in a range from 10 to 1200 rpm, from 20 to 1000 rpm, from 30 to 800 rpm, from 50 to 800 rpm, from 50 to 600 rpm, from 80 to 600 rpm, from 100 to 500 rpm, from 150 to 450 rpm, from 180 to 400 rpm, from 180 to 380 rpm, or even from 200 to 350 rpm.

The process of the present disclosure further comprises the step of providing reactants and reagents comprising:
i. at least one isocyanate;
ii. at least one amine; and
iii. optionally, at least one plasticizer.

Isocyanate and amine compounds for use herein are not particularly limited. Any isocyanate and amine compounds commonly known in the art may be used in the context of the present disclosure. Suitable isocyanate and amine compounds for use herein will be easily identified by those skilled in the art, in the light of the present description. Appropriate isocyanate and amine compounds for use herein will typically depend on the targeted properties of the resulting the reaction product comprising the urea derivative and on the specific characteristics intended for the moisture-curable adhesive composition that is ultimately obtained.

In an exemplary aspect, the at least one amine for use herein is selected from the group consisting of primary aliphatic, aromatic monoamines, aromatic diamines, and any combinations or mixtures thereof.

In one advantageous aspect, the at least one amine for use herein is selected from the group consisting of N-alkyl amines, aromatic monoamines, and any combinations or mixtures thereof.

According to a more advantageous aspect, the at least one amine for use herein is selected from the group consisting of N-butyl amine, benzylamine, and any combinations or mixtures thereof.

Exemplary isocyanates for use herein include, but are not limited to, aliphatic isocyanates, aromatic isocyanates, and any polymers, derivatives, combinations or mixtures thereof.

In one advantageous aspect of the disclosure, the at least one isocyanate for use herein is selected from the group consisting of difunctional isocyanates, in particular aliphatic or aromatic diisocyanates.

According to one more advantageous aspect, the at least one isocyanate for use herein is selected from the group of aliphatic diisocyanates, in particular from the group consisting of isophorone diisocyanate (IPDI), hexamethylene diisocyanate (HDI), methylenedicyclohexane diisocyanate (MDI), 4,4'-methylene dicyclohexyl diisocyanate (H12MDI), m-xylylene diisocyanate (XDI), tetramethylxylene diisocyanate (TMXDI), and any combinations or mixtures thereof.

According to one more advantageous aspect, the at least one isocyanate for use herein is selected from the group consisting of aromatic diisocyanates, in particular from the group consisting of diphenylmethane diisocyanate (MDI), toluene diisocyanate (TDI), and any mixtures thereof.

In a particular aspect, the at least one isocyanate for use herein may be present at least partially in a polymeric form, or in the form of a combination of isocyanates and polyisocyanates.

The reactants and reagents for use in the process of the present disclosure may further comprise at least one optional plasticizer.

Plasticizers for use herein are not particularly limited. Any plasticizers commonly known in the art may be used in the context of the present disclosure. Suitable plasticizers for use herein will be easily identified by those skilled in the art, in the light of the present description. Appropriate plasticizers for use herein will typically depend on the targeted properties of the resulting the reaction product comprising the urea derivative and on the specific characteristics intended for the moisture-curable adhesive composition that is ultimately obtained.

In one advantageous aspect, the at least one plasticizer for use herein is selected from the group consisting of phthalate-based plasticizers, phthalate-free plasticizers, and any mixtures thereof.

According to one more advantageous aspect, the at least one plasticizer for use herein is selected from the group consisting of phthalate-based plasticizers, in particular from the group consisting of diisodecyl phthalate (DIDP), diisodecyl terephthalate (DIDT), dibutyl phthalate (DBP), diisobutyl phthalate (DIBP), dibutyl terephthalate (DBT), diisobutyl terephthalate (DIBT), dioctyl phthalate (DOP), dioctyl terephthalate (DOTP), di-ethylhexyl phthalate (DEHP), di-ethylhexyl terephthalate (DEHT), diisononyl phthalate (DINP), diisononyl terephthalate (DINT), diisoundecyl phthalate (DIUP), diisoundecyl terephthalate (DIUT), dimethyl phthalate (DMP), dimethyl terephthalate (DMT), benzyl butyl phthalate (BBP), benzyl butyl terephthalate (BBT), di-ethylhexyl adipate (DEHA), and any mixtures thereof.

According to another more advantageous aspect, the at least one plasticizer for use herein is selected from the group consisting of phthalate-free plasticizers, in particular from the group consisting of 1,2 cyclohexane dicarboxylic acid diisononyl ester; sulfonate esters, in particular alkyl aryl sulfonates; phosphate esters, in particular triaryl and alkyl diaryl phosphates; benzoates, in particular benzoate and dibenzoate esters; maleate esters; trimellitate esters; and any combinations or mixtures thereof.

According to a particularly advantageous aspect, the at least one plasticizer for use herein is selected to comprise diisodecyl phthalate (DIDP).

The process of the present disclosure further comprises the step of incorporating the reactants and reagents into the reaction chamber of the multi-screw extruder, thereby forming a reaction product comprising a urea derivative.

According to a typical aspect of the present disclosure, the urea derivative comprised in the reaction product is (or acts as) a thixotropic agent for the moisture-curable adhesive composition, thereby helping the composition achieving, in particular, its excellent and versatile rheological properties. According to still a typical aspect of the present disclosure, the urea derivative is formed in-situ by a so-called reactive extrusion process.

According to a beneficial aspect of the present disclosure, the urea derivative comprised in the reaction product for use herein is a polyfunctional urea derivative (or a polyurea), in particular a difunctional urea derivative.

In one advantageous aspect of the process of the disclosure, the urea derivative comprised in the reaction product for use herein has a weight average molecular weight (M_{w}) in a range from 100 to 1000 g/mol, from 100 to 800 g/mol, from 150 to 750 g/mol, from 200 to 700 g/mol, from 200 to 600 g/mol, from 250 to 550 g/mol, from 250 to 500 g/mol, or even from 300 to 500 g/mol.

In another advantageous aspect of the process of the disclosure, the reaction product comprising the urea derivative is in the form of a (gel) paste having in particular a viscosity greater than 5000 Pa.s, greater than 10.000 Pa.s, greater than 20.000 Pa.s, greater than 30.000 Pa.s, greater than 50.000 Pa.s, greater than 70.000 Pa.s, or even greater than 90.000 Pa.s, when measured at 23°C with a rheometer in a shear flow mode at 0.1 s⁻¹.

The above-mentioned viscosity ranges for the reaction product comprising the urea derivative are particularly advantageous to ensure good rheological properties prior to incorporation of the at least one moisture-curable prepolymer, as well as excellent dispersion of the at least one moisture-curable prepolymer after incorporation into the reaction product comprising the urea derivative.

In an advantageous aspect of the disclosure, the at least one optional plasticizer may be appropriately used to modulate and achieve the suitable rheological properties, in particular suitable viscosity, of the reaction product comprising the urea derivative prior to incorporation of the at least one moisture-curable prepolymer.

According to another advantageous aspect, the process of the present disclosure may further comprise the step of pre-mixing the amine and the optional plasticizer, in particular in a static mixing element, before incorporation into the reaction chamber of the multi-screw extruder.

According to still another advantageous aspect, the process of the present disclosure may further comprise the step of pre-mixing the isocyanate and the optional plasticizer, in particular in a static or dynamic mixing element, before incorporation into the reaction chamber of the multi-screw extruder.

The process of the present disclosure further comprises the step of incorporating at least one moisture-curable prepolymer into the reaction product resulting from step c), thereby forming a moisture-curable adhesive composition.

Moisture-curable prepolymers for use herein are not particularly limited. Any moisture-curable prepolymers commonly known in the art may be used in the context of the present disclosure. Suitable moisture-curable prepolymers for use herein will be easily identified by those skilled in the art, in the light of the present description. Appropriate moisture-curable prepolymers for use herein will typically depend on the targeted properties and specific characteristics of the moisture-curable adhesive composition that is ultimately obtained.

According to an advantageous aspect of the disclosure, the at least one moisture-curable prepolymer for use herein is selected from the group consisting of isocyanate-terminated moisture-curable prepolymers and silane-modified moisture-curable prepolymers.

According to a more advantageous aspect of the disclosure, the at least one moisture-curable prepolymer for use herein is selected from the group consisting of isocyanate-terminated moisture-curable prepolymers, silane-terminated moisture-curable prepolymers, and any combinations or mixtures thereof.

In one particularly advantageous aspect of the disclosure, the at least one moisture-curable prepolymer for use herein is selected from the group consisting of isocyanate-terminated moisture-curable prepolymers.

In another particularly advantageous aspect of the disclosure, the at least one moisture-curable prepolymer for use herein is selected from the group consisting of silane-modified moisture-curable prepolymers, in particular from the group consisting of silane-modified polyether prepolymers, silane-terminated polyether prepolymers, silane-modified polyurethane prepolymers, silane-terminated polyurethane prepolymers, and any combinations or mixtures thereof.

According to a beneficial aspect, the at least one moisture-curable prepolymer for use in the present disclosure has a weight average molecular weight in a range from 50 to 100.000 g/mol, from 100 to 75.000 g/mol, from 100 to 50.000 g/mol, from 1000 to 50.000 g/mol, from 5000 to 50.000 g/mol, from 10.000 to 50.000 g/mol, or even from 20.000 to 50.000 g/mol.

In one particular aspect of the process of the disclosure, the at least one moisture-curable prepolymer is advantageously introduced in the downstream section of the multi-screw extruder, in particular outside the reaction chamber of the multi-screw extruder. This beneficial execution ensures, in particular, that the moisture-curable prepolymer does not enter into unwanted reactions with the reactants initially introduced into the reaction chamber of the multi-screw extruder.

According to a particularly advantageous aspect, the process of the present disclosure allows producing moisture-curable adhesive compositions provided with relatively high viscosity.

In one advantageous aspect, the moisture-curable adhesive composition of the present disclosure has a viscosity greater than 100 Pa.s, greater than 300 Pa.s, greater than 500 Pa.s, greater than 800 Pa.s, greater than 1000 Pa.s, greater than 1500 Pa.s, greater than 2000 Pa.s, greater than 2500 Pa.s, greater than 3000 Pa.s, greater than 3500 Pa.s, greater than 4000 Pa.s, greater than 5000 Pa.s, greater than 6000 Pa.s, greater than 7000 Pa.s, greater than 8000 Pa.s, greater than 9000 Pa.s, or even greater than 9500 Pa.s, when measured at 23°C with a rheometer in a shear flow mode at 0.1 s⁻¹.

In another advantageous aspect of the present disclosure, the moisture-curable adhesive composition has a viscosity in a range from 100 to 10.000 Pa.s, from 100 to 8000 Pa.s, from 100 to 6000 Pa.s, from 100 to 5000 Pa.s, from 100 to 4000 Pa.s, from 200 to 3500 Pa.s, from 500 to 3000 Pa.s, from 1000 to 2500 Pa.s, or even from 1500 to 2000 Pa.s, when measured at 23°C with a rheometer in a shear flow mode at 0.1 s⁻¹.

Advantageously, the moisture-curable adhesive composition of the present disclosure is a one-component moisture-curable adhesive composition, which beneficially takes the form of a smooth pasty composition provided with well dispersed urea derivative material.

According to a typical aspect, the process of the present disclosure further comprises the step of curing or allowing the moisture-curable adhesive composition to cure, in particular moisture curing the moisture-curable adhesive composition. The step of curing or allowing the moisture-curable adhesive composition to cure is typically performed after the moisture-curable adhesive composition has been applied to the substrate(s) to which it is intended to provide its adhesion properties.

As will be easily apparent to those skilled in the art, the moisture-curable adhesive composition of the present disclosure may comprise further additives, in amounts typically used in the field of application, to impart certain desirable characteristics and properties to the moisture-curable adhesive compositions. Exemplary additives for use herein include, but are not limited to, fillers, fibers, further plasticizers, further thixotropic agents, adhesion promoters, moisture scavengers, tackifying systems, stabilizers, fungicides, antioxidants, pigments, catalysts, UV stabilizers, rheology modifiers, flame retardants, biocides or wetting agents.

Accordingly, and in one advantageous aspect of the disclosure, the process further comprises the step of incorporating further additives into the reaction product resulting from step c).

According to a more advantageous aspect, the further additives are introduced into the reaction product resulting from step c) before the step of incorporating the at least one moisture-curable prepolymer into the reaction product.

In one particular aspect, the additives for use in the process according to the disclosure are selected from the group consisting of fillers, further plasticizers, further thixotropic agents, adhesion promoters, moisture scavengers, tackifying systems, stabilizers, fungicides, antioxidants, pigments, catalysts, and any mixtures thereof.

In an advantageous aspect of the disclosure, the additives for use in the process are selected from the group consisting of particulate fillers, in particular organic and inorganic particulate fillers, moisture scavengers, adhesion promoters, and any combinations or mixtures thereof.

In a more advantageous aspect, the additives for use herein are selected from the group consisting of inorganic particulate fillers, in particular from the group consisting of calcium carbonates, in particular ground or precipitated calcium carbonate, optionally coated with fatty acids or fatty esters; magnesium hydroxides; aluminum oxides; aluminum trihydrates; lime; kaolin; silica-based filers, in particular fumed silica, precipitated silica, pyrogenated silica; titanium dioxide; microspheres, in particular glass bubbles and hollow glass microspheres; and any combinations or mixtures thereof.

In another more advantageous aspect, the additives for use herein are selected from the group consisting of organic particulate fillers, in particular from the group consisting of carbon black, PVC powders or flakes, fibres, in particular polyethylene fibres, and any mixtures thereof.

In a particularly advantageous aspect of the disclosure, the additives for use herein are selected to comprise calcium carbonates, in particular ground calcium carbonates.

According to the advantageous aspect whereby the process further comprises the step of incorporating inorganic particulate fillers into the reaction product, the process may advantageously further comprise the step of pre-drying the inorganic fillers before incorporating into the reaction product resulting from step c). In one advantageous aspect, the step of pre-drying the inorganic fillers is performed by thermal treatment, and in particular in a dynamic mode at temperatures typically greater than 90°C. In another advantageous aspect, the step of pre-drying the inorganic fillers may involve applying selected vacuum conditions.

Advantageously still, the pre-dried inorganic fillers for use herein may be beneficially introduced in the downstream section of the multi-screw extruder, in particular outside the reaction chamber of the multi-screw extruder.

Selecting and fine-tuning the various operating parameters of the multi-screw extruder and the processing conditions, is well within the capabilities of those skilled in the art of formulating moisture-curable adhesive compositions. These operating parameters will typically be adapted, in particular, to the nature of the starting materials and the properties of the targeted moisture-curable adhesive composition.

According to an exemplary aspect of the process according to the disclosure, the temperature of the reaction chamber is in a range from 0°C to 150°C, from 0°C to 120°C, from 0°C to 100°C, from 0°C to 80°C, from 0°C to 70°C, from 5°C to 60°C, from 10°C to 60°C, from 15°C to 60°C, from 15°C to 55°C, from 15°C to 50°C, or even from 15°C to 40°C, after incorporation of the reactants and reagents, and in particular the isocyanate, the amine and the optional plasticizer.

According to another exemplary aspect of the process, the temperature of the reaction chamber is advantageously no greater than 150°C, no greater than 120°C, no greater than 100°C, no greater than 80°C, no greater than 60°C, no greater than 50°C, or even no greater than 40°C, after incorporation of the reactants and reagents, and in particular the isocyanate, the amine and the optional plasticizer.

In one advantageous aspect of the process, the residence time of the reaction product stream comprising the urea derivative in the reaction chamber of the multi-screw extruder is in a range from 1 to 120 seconds, from 1 to 90 seconds, from 2 to 60 seconds, from 2 to 30 seconds, from 2 to 25 seconds, from 3 to 20 seconds, from 3 to 15 seconds, from 3 to 10 seconds, or even from 5 to 10 seconds.

In another advantageous aspect of the process, the residence time of the reaction product stream comprising the urea derivative in the reaction chamber of the multi-screw extruder is no greater than 120 seconds, no greater than 90 seconds, no greater than 60seconds, no greater than 30 seconds, no greater than 25 seconds, no greater than 20, no greater than 15, or even no greater than 10 seconds.

In a particular aspect of the process of the present disclosure, the moisture-curable adhesive composition comprises:
a) from 2 to 80 wt.%, from 5 to 80 wt.%, from 5 to 70 wt.%, from 10 to 70 wt.%, from 10 to 60 wt.%, from 15 to 55 wt.%, from 20 to 55 wt.%, from 20 to 50 wt.%, from 25 to 45 wt.%, or even from 25 to 40 wt.%, of the reaction product comprising a urea derivative and resulting from step c);
b) from 10 to 50 wt.%, from 10 to 45 wt.%, from 15 to 40 wt.%, from 15 to 35 wt.%, from 15 to 30 wt.%, or even from 20 to 30 wt.%, of the at least one moisture-curable prepolymer; and
c) optionally, from 10 to 50 wt.%, from 10 to 45 wt.%, from 15 to 40 wt.%, from 15 to 35 wt.%, from 15 to 30 wt.%, or even from 20 to 30 wt.%, of particulate fillers, in particular particulate inorganic fillers.

A moisture-curable adhesive composition is obtainable by the process as described above.

According to an advantageous aspect, the moisture-curable adhesive composition
has a viscosity greater than 100 Pa.s, greater than 300 Pa.s, greater than 500 Pa.s, greater than 800 Pa.s, greater than 1000 Pa.s, greater than 1500 Pa.s, greater than 2000 Pa.s, greater than 2500 Pa.s, greater than 3000 Pa.s, greater than 3500 Pa.s, greater than 4000 Pa.s, greater than 5000 Pa.s, greater than 6000 Pa.s, greater than 7000 Pa.s, greater than 8000 Pa.s, greater than 9000 Pa.s, or even greater than 9500 Pa.s, when measured at 23°C with a rheometer in a shear flow mode at 0.1 s⁻¹.

According to another advantageous aspect, the moisture-curable adhesive composition has a viscosity in a range from 100 to 10,000 Pa.s, from 100 to 8000 Pa.s, from 100 to 6000 Pa.s, from 100 to 5000 Pa.s, from 100 to 4000 Pa.s, from 200 to 3500 Pa.s, from 500 to 3000 Pa.s, from 1000 to 2500 Pa.s, or even from 1500 to 2000 Pa.s, when measured at 23°C with a rheometer in a shear flow mode at 0.1 s⁻¹.

According to another advantageous aspect, the moisture-curable adhesive composition has a shelf life greater than 6 months, greater than 9 months, greater than 12 months, or even greater than 18 months, or even greater than 24 months, when determined according to the test method described in the experimental section.

The composition as described above
can be used for industrial applications, in particular for transportation market applications, more in particular automotive, marine, rail and aerospace applications, or for construction market applications.

The moisture-curable prepolymer
can be used for the manufacturing of a moisture-curable adhesive composition in a multi-screw extruder, wherein the moisture-curable adhesive composition comprises a urea derivative as a thixotropic agent.

According to a preferred aspect of the process of the present disclosure, the process may be continuous.

### EXAMPLES

The invention is further illustrated by the following examples. These examples are merely for illustrative purposes only and are not meant to be limiting on the scope of the appended claims.

### Test methods and procedures:

### Shelf life

Shelf life of the moisture-curable compositions according to the present disclosure is determined upon storage at ambient conditions (23°C and 50% relative humidity) and after accelerated ageing conditions (5 days at 60°C and 50% relative humidity) according to the following criteria: visual aspect, reactivity, extrusion rate and viscosity after ageing are checked, and should remain unchanged.

### Weight Average Molecular Weight measurement (M_{w})

The weight average molecular weight and number average molecular weight of the polymers are determined using conventional gel permeation chromatography (GPC). The GPC apparatus obtained from Waters, include a high-pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent. The weight average molecular weight (Mw) is calculated for each sample from the calibration curve.

### Equipment employed:

The experiments and reactions are performed using a 20-mm twin-screw co-rotating extruder available under the trade designation Omega 20, from Steer, India.

### Materials employed:

**Desmodur T80:** 2,4- and 2,6-toluene diisocyanate (TDI) mixture in a 80:20 ratio, commercially available from Covestro, Germany.

**Ongronat 3050:** 4,4'-methylene bis(phenylisocyanate) (MDI), commercially available from BorsodChem, Hungary.

**Vestanat H12MDI:** 4,4'-Methylene dicyclohexyl diisocyanate, commercially available from Evonik, Germany.

**Benzylamine:** monoamine, commercially available from BASF, Germany. **n-Butylamine:** monoamine, commercially available from BASF, Germany.

**PU prepolymer:** MDI polyurethane prepolymer having a weight average molecular weight of about 36.000 g/mol, which may be obtained from 3M France, Haguenau.

**Jayflex DIDP:** Diisodecyl phthalate, plasticizer commercially available from ExxonMobil, Germany. **Omyacarb 5GU:** calcium carbonate filler, commercially available from Omya, France.

**Sachtleben RFK2:** titanium oxide-based filler, commercially available from Venator, Germany.

**Microspheres S38:** hollow glass microspheres, commercially available from the 3M Company.

**Benzoyl chloride:** stabilizer, commercially available from Sigma-Aldrich.

**Additive Ti:** Moisture scavenger, commercially available from Borchers, Germany. **Dynasylan Glymo:** silane-based adhesion promotor, commercially available from Evonik, Germany.

### General preparation of the moisture-curable adhesive composition:

A 20-mm diameter co-rotating twin screw extruder, commercially available as « Omega 20 » from Steer India, is used to prepare the moisture-curable adhesive compositions. The twin screw extruder has 10 zones, each corresponding to one tenth of the length of the screw. Total process length of the extruder is 60 diameters (1200mm). The twin screw extruder is operated at 600 rpm, at 45°C in zone 1 and 2, at 65°C in zone 3, at 70°C in zone 4, at 65°C in zone 5, and at 60°C in zones 6 to 10. The portion of the plasticizer is fed from a nitrogen inerted tank through a gear pump (Zenith B9000 series) and Coriolis flowmeter (Micromotion) into zone 1 at 8,45g/min. A 2:1 ratio of the plasticizer to the isocyanate is fed via a similar setup to zone 2 of the extruder at 8,91g/min. The amine is fed into zone 3 of the extruder via a Harvard syringe pump through a Coriolis (Bronkhorst) flowmeter at 1.72g/min. The calcium carbonate is fed at 30.92 g/min via a K-Tron T20 feeder (Coperion) through a side stuffer into zone 5 of the extruder. The PU prepolymer is fed via an inerted holding tank through a gear pump and flowmeter at a rate of 22.14g/min into zone 8 of the extruder. The glass bubbles are fed via a K-Tron T20 feeder through a side stuffer into zone 9 of the extruder at a rate of 3.55 g/min. The resulting material is discharged through a discharge valve at the end of the extruder screws.

Exemplary moisture-curable adhesive compositions according to the disclosure are described in Table 1.

### Examples:

**Table 1:**

| | Ex.1 | Ex.2 | Ex.3 | Ex.4 | Ex.5 | Ex.4 |
|---|---|---|---|---|---|---|
| PU Prepolymer | 25.00 | 23.71 | 26.14 | 24.00 | 24.31 | 24.33 |
| DIDP | 23.61 | 24.94 | 19.64 | 22.80 | 22.46 | 25.62 |
| MDI | 3.35 | 5.15 | 4.06 | 4.28 | - | 5.31 |
| H12MDI | - | - | - | 2.20 | - | - |
| TDI | - | - | - | - | 5.24 | - |
| N-Butylamine | 2.10 | 3.10 | 2.44 | 3.80 | - | 3.03 |
| Benzylamine | - | - | - | - | 6.33 | - |
| Fillers | 45.45 | 41.25 | 46.33 | 42.33 | 40.11 | 40.15 |
| Benzoyl chloride | 0.10 | 1.56 | 1.10 | 0.29 | 1.15 | 1.16 |
| Dynasylan Glymo | 0,20 | 0.19 | 0.19 | 0.20 | 0.20 | 0.20 |
| Tin-based catalytic system | 0.19 | 0.10 | 0.10 | 0.10 | 0.20 | 0.20 |
| TOTAL | 100 | 100 | 100 | 100 | 100 | 100 |

## Claims

1. A process of manufacturing a moisture-curable adhesive composition, wherein the process comprises the steps of:
a) providing a multi-screw extruder comprising a reaction chamber;
b) providing reactants and reagents comprising:
i. at least one isocyanate;
ii. at least one amine; and
iii. optionally, at least one plasticizer;
c) incorporating the reactants and reagents into the reaction chamber of the multi-screw extruder, thereby forming a reaction product comprising a urea derivative; and
d) incorporating at least one moisture-curable prepolymer into the reaction product resulting from step c), thereby forming a moisture-curable adhesive composition or a precursor thereof.

2. A process according to claim 1, wherein the at least one moisture-curable prepolymer is selected from the group consisting of isocyanate-terminated moisture-curable prepolymers and silane-modified moisture-curable prepolymers.

3. A process according to any of claim 1 or 2, wherein the at least one moisture-curable prepolymer is selected from the group consisting of isocyanate-terminated moisture-curable prepolymers.

4. A process according to any of the preceding claims, wherein the moisture-curable adhesive composition has a viscosity greater than 100 Pa.s, greater than 300 Pa.s, greater than 500 Pa.s, greater than 800 Pa.s, greater than 1000 Pa.s, greater than 1500 Pa.s, greater than 2000 Pa.s, greater than 2500 Pa.s, greater than 3000 Pa.s, greater than 3500 Pa.s, greater than 4000 Pa.s, greater than 5000 Pa.s, greater than 6000 Pa.s, greater than 7000 Pa.s, greater than 8000 Pa.s, greater than 9000 Pa.s, or even greater than 9500 Pa.s, when measured at 23°C with a rheometer in a shear flow mode at 0.1 s⁻¹.

5. A process according to any of the preceding claims, wherein the urea derivative is a thixotropic agent, which is in particular in the form of a paste having a viscosity greater than 5000 Pa.s, greater than 10.000 Pa.s, greater than 20.000 Pa.s, greater than 30.000 Pa.s, greater than 50.000 Pa.s, greater than 70.000 Pa.s, or even greater than 90.000 Pa.s, when measured at 23°C with a rheometer in a shear flow mode at 0.1 s⁻¹.

6. A process according to any of the preceding claims, wherein the at least one amine is selected from the group consisting of primary aliphatic, aromatic monoamines, aromatic diamines, and any combinations or mixtures thereof.

7. A process according to any of the preceding claims, wherein the at least one isocyanate is selected from the group consisting of difunctional isocyanates, in particular aliphatic or aromatic diisocyanates, and any combinations or mixtures thereof.

8. A process according to any of the preceding claims, wherein the urea derivative is a polyfunctional urea derivative, in particular a difunctional urea derivative.

9. A process according to any of the preceding claims, wherein the plasticizer is selected from the group consisting of phthalate-based plasticizers, phthalate-free plasticizers, and any mixtures thereof.

10. A process according to any of the preceding claims, wherein the multi-screw extruder is selected from the group of twin-screw extruders, planetary roller extruders, and ring extruders.

11. A process according to any of the preceding claims, which further comprises the step of incorporating further additives into the reaction product resulting from step c), in particular before the step of incorporating the at least one moisture-curable prepolymer into the reaction product.

12. A process according to claim 11, wherein the additives are selected from the group consisting of particulate fillers, in particular organic and inorganic particulate fillers, moisture scavengers, adhesion promoters, and any combinations or mixtures thereof.

13. A process according to any of the preceding claims, wherein the moisture-curable adhesive composition comprises:
a) from 2 to 80 wt.%, from 5 to 80 wt.%, from 5 to 70 wt.%, from 10 to 70 wt.%, from 10 to 60 wt.%, from 15 to 55 wt.%, from 20 to 55 wt.%, from 20 to 50 wt.%, from 25 to 45 wt.%, or even from 25 to 40 wt.%, of the reaction product comprising a urea derivative and resulting from step c);
b) from 10 to 50 wt.%, from 10 to 45 wt.%, from 15 to 40 wt.%, from 15 to 35 wt.%, from 15 to 30 wt.%, or even from 20 to 30 wt.%, of the at least one moisture-curable prepolymer; and
c) optionally, from 10 to 50 wt.%, from 10 to 45 wt.%, from 15 to 40 wt.%, from 15 to 35 wt.%, from 15 to 30 wt.%, or even from 20 to 30 wt.%, of particulate fillers, in particular particulate inorganic fillers.

## Patentansprüche

1. Ein Verfahren zum Herstellen einer feuchtigkeitshärtbaren Klebstoffzusammensetzung, wobei das Verfahren die Schritte umfasst:
a) Bereitstellen eines Mehrschneckenextruders, der eine Reaktionskammer aufweist;
b) Bereitstellen von Reaktanten und Reagenzien, aufweisend:
i. mindestens ein Isocyanat;
ii. mindestens ein Amin; und
iii. optional mindestens einen Weichmacher;
c) Aufnehmen der Reaktanten und Reagenzien in die Reaktionskammer des Mehrschneckenextruders, wodurch ein Reaktionsprodukt gebildet wird, das ein Harnstoff-Derivat aufweist; und
d) Aufnehmen mindestens eines feuchtigkeitshärtbaren Prepolymers in das Reaktionsprodukt, das aus Schritt c) entsteht, wodurch eine feuchtigkeitshärtbare Klebstoffzusammensetzung oder ein Precursor davon gebildet wird.

2. Ein Verfahren nach Anspruch 1, wobei das mindestens eine feuchtigkeitshärtbare Prepolymer ausgewählt ist aus der Gruppe bestehend aus Isocyanat-terminierten feuchtigkeitshärtbaren Prepolymeren und silanmodifizierten feuchtigkeitshärtbaren Prepolymeren.

3. Ein Verfahren nach einem der Ansprüche 1 oder 2, wobei das mindestens eine feuchtigkeitshärtbare Prepolymer ausgewählt ist aus der Gruppe bestehend aus Isocyanat-terminierten feuchtigkeitshärtbaren Prepolymeren.

4. Ein Verfahren nach einem der vorstehenden Ansprüche, wobei die feuchtigkeitshärtbare Klebstoffzusammensetzung eine Viskosität von mehr als 100 Pa.s, mehr als 300 Pa.s, mehr als 500 Pa.s, mehr als 800 Pa.s, mehr als 1.000 Pa.s, mehr als 1.500 Pa.s, mehr als 2.000 Pa.s, mehr als 2.500 Pa.s, mehr als 3.000 Pa.s, mehr als 3.500 Pa.s, mehr als 4.000 Pa.s, mehr als 5.000 Pa.s, mehr als 6.000 Pa.s, mehr als 7.000 Pa.s, mehr als 8.000 Pa.s, mehr als 9.000 Pa.s oder sogar mehr als 9.500 Pa.s aufweist, wenn bei 23 °C mit einem Rheometer in einem Scherflussmodus bei 0,1 s-¹ gemessen wird.

5. Ein Verfahren nach einem der vorstehenden Ansprüche, wobei das Harnstoffderivat ein Thixotropiemittel ist, das insbesondere in Form einer Paste vorliegt, die eine Viskosität von mehr als 5.000 Pa.s, mehr als 10.000 Pa.s, mehr als 20.000 Pa.s, mehr als 30.000 Pa.s, mehr als 50.000 Pa.s, mehr als 70.000 Pa.s oder sogar mehr als 90.000 Pa.s aufweist, wenn bei 23 °C mit einem Rheometer in einem Scherflussmodus bei 0,1 s-¹ gemessen wird.

6. Ein Verfahren nach einem der vorstehenden Ansprüche, wobei das mindestens eine Amin ausgewählt ist aus der Gruppe bestehend aus primären aliphatischen, aromatischen Monoaminen, aromatischen Diaminen und beliebigen Kombinationen oder Mischungen davon.

7. Ein Verfahren nach einem der vorstehenden Ansprüche, wobei das mindestens eine Isocyanat ausgewählt ist aus der Gruppe bestehend aus difunktionellen Isocyanaten, insbesondere aliphatischen oder aromatischen Di-Isocyanaten und beliebigen Kombinationen oder Mischungen davon.

8. Ein Verfahren nach einem der vorstehenden Ansprüche, wobei das Harnstoffderivat ein polyfunktionelles Harnstoffderivat, insbesondere ein difunktionelles Harnstoffderivat, ist.

9. Ein Verfahren nach einem der vorstehenden Ansprüche, wobei der Weichmacher ausgewählt ist aus der Gruppe bestehend aus phthalatbasierten Weichmachern, phthalatfreien Weichmachern und beliebigen Mischungen davon.

10. Ein Verfahren nach einem der vorstehenden Ansprüche, wobei der Mehrschneckenextruder ausgewählt ist aus der Gruppe von Doppelschneckenextrudern, Planetwalzenextrudern und Ringextrudern.

11. Ein Verfahren nach einem der vorstehenden Ansprüche, ferner umfassend den Schritt des Aufnehmens weiterer Additive in das Reaktionsprodukt, das aus Schritt c) entsteht, insbesondere vor dem Schritt des Aufnehmens des mindestens einen feuchtigkeitshärtbaren Prepolymers in das Reaktionsprodukt.

12. Ein Verfahren nach Anspruch 11, wobei die Additive ausgewählt sind aus der Gruppe bestehend aus teilchenförmigen Füllstoffen, insbesondere organischen und anorganischen teilchenförmigen Füllstoffen, Feuchtigkeitsfängern, Haftvermittlern und beliebigen Kombinationen oder Mischungen davon.

13. Ein Verfahren nach einem der vorstehenden Ansprüche, wobei die feuchtigkeitshärtbare Klebstoffzusammensetzung umfasst:
a) von 2 bis 80 Gew.-%, von 5 bis 80 Gew.-%, von 5 bis 70 Gew.-%, von 10 bis 70 Gew.-%, von 10 bis 60 Gew.-%, von 15 bis 55 Gew.-%, von 20 bis 55 Gew.-%, von 20 bis 50 Gew.-%, von 25 bis 45 Gew.-% oder sogar von 25 bis 40 Gew.-% des Reaktionsprodukts, das ein Harnstoffderivat umfasst und aus Schritt c) entsteht;
b) von 10 bis 50 Gew.-%, von 10 bis 45 Gew.-%, von 15 bis 40 Gew.-%, von 15 bis 35 Gew.-%, von 15 bis 30 Gew.-% oder sogar von 20 bis 30 Gew.-% des mindestens einen feuchtigkeitshärtbaren Prepolymers; und
c) optional von 10 bis 50 Gew.-%, von 10 bis 45 Gew.-%, von 15 bis 40 Gew.-%, von 15 bis 35 Gew.-%, von 15 bis 30 Gew.-% oder sogar von 20 bis 30 Gew.-% teilchenförmige Füllstoffe, insbesondere teilchenförmige anorganische Füllstoffe.

## Revendications

1. Procédé de fabrication d'une composition adhésive durcissable à l'humidité, dans lequel le procédé comprend les étapes consistant à :
a) fournir une extrudeuse à vis multiples comprenant une chambre de réaction ;
b) fournir des réactants et des réactifs comprenant :
i. au moins un isocyanate ;
ii. au moins une amine ; et
iii. éventuellement, au moins un plastifiant ;
c) incorporer les réactants et les réactifs dans la chambre de réaction de l'extrudeuse à vis multiples, formant ainsi un produit de réaction comprenant un dérivé d'urée ; et
d) incorporer au moins un prépolymère durcissable à l'humidité dans le produit de réaction résultant de l'étape c), formant ainsi une composition adhésive durcissable à l'humidité ou un précurseur de celle-ci.

2. Procédé selon la revendication 1, dans lequel l'au moins un prépolymère durcissable à l'humidité est choisi dans le groupe constitué de prépolymères durcissables à l'humidité à terminaison isocyanate et de prépolymères durcissables à l'humidité à modification silane.

3. Procédé selon l'une quelconque des revendications 1 ou 2, dans lequel l'au moins un prépolymère durcissable à l'humidité est choisi dans le groupe constitué de prépolymères durcissables à l'humidité à terminaison isocyanate.

4. Procédé selon l'une quelconque des revendications précédentes, dans lequel la composition adhésive durcissable à l'humidité présente une viscosité supérieure à 100 Pa.s, supérieure à 300 Pa.s, supérieure à 500 Pa.s, supérieure à 800 Pa.s, supérieure à 1 000 Pa.s, supérieure à 1 500 Pa.s, supérieure à 2 000 Pa.s, supérieure à 2 500 Pa.s, supérieure à 3 000 Pa.s, supérieure à 3 500 Pa.s, supérieure à 4 000 Pa.s, supérieure à 5 000 Pa.s, supérieure à 6 000 Pa.s, supérieure à 7 000 Pa.s, supérieure à 8 000 Pa.s, supérieure à 9 000 Pa.s, ou même supérieure à 9 500 Pa.s, lorsqu'on mesure à 23 °C au moyen d'un rhéomètre en mode flux de cisaillement à 0,1 s⁻¹.

5. Procédé selon l'une quelconque des revendications précédentes, dans lequel le dérivé d'urée est un agent thixotrope, qui est en particulier sous la forme d'une pâte présentant une viscosité supérieure à 5 000 Pa.s, supérieure à 10,000 Pa.s, supérieure à 20,000 Pa.s, supérieure à 30,000 Pa.s, supérieure à 50,000 Pa.s, supérieure à 70,000 Pa.s, ou même supérieure à 90,000 Pa.s, lorsqu'on mesure à 23 °C au moyen d'un rhéomètre en mode flux de cisaillement à 0,1 s⁻¹.

6. Procédé selon l'une quelconque des revendications précédentes, dans lequel l'au moins une amine est choisie dans le groupe constitué d'aliphatique primaire, de monoamines aromatiques, de diamines aromatiques, et toute combinaison ou tout mélange de ceux-ci.

7. Procédé selon l'une quelconque des revendications précédentes, dans lequel l'au moins un isocyanate est choisi dans le groupe constitué d'isocyanates difonctionnels, en particulier des diisocyanates aliphatiques ou aromatiques, et toute combinaison ou tout mélange de ceux-ci.

8. Procédé selon l'une quelconque des revendications précédentes, dans lequel le dérivé d'urée est un dérivé d'urée polyfonctionnel, en particulier un dérivé d'urée difonctionnel.

9. Procédé selon l'une quelconque des revendications précédentes, dans lequel le plastifiant est choisi dans le groupe constitué de plastifiants à base de phthalate, plastifiants exempts de phthalate, et tout mélange de ceux-ci.

10. Procédé selon l'une quelconque des revendications précédentes, dans lequel l'extrudeuse à vis multiples est choisie dans le groupe d'extrudeuses à double vis, extrudeuses à rouleau planétaire, et extrudeuses annulaires.

11. Procédé selon l'une quelconque des revendications précédentes, qui comprend en outre l'étape d'incorporation d'additifs supplémentaires dans le produit de réaction résultant de l'étape c), en particulier avant l'étape d'incorporation de l'au moins un prépolymère durcissable à l'humidité dans le produit de réaction.

12. Procédé selon la revendication 11, dans lequel les additifs sont choisis dans le groupe constitué de charges particulaires, en particulier des charges particulaires organiques et inorganiques, des capteurs d'humidité, des promoteurs d'adhérence, et toute combinaison ou tout mélange de ceux-ci.

13. Procédé selon l'une quelconque des revendications précédentes, dans lequel la composition d'adhésif durcissable à l'humidité comprend :
a) de 2 à 80 % en poids, de 5 à 80 % en poids, de 5 à 70 % en poids, de 10 à 70 % en poids, de 10 à 60 % en poids, de 15 à 55 % en poids, de 20 à 55 % en poids, de 20 à 50 % en poids, de 25 à 45 % en poids, ou même de 25 à 40 % en poids, du produit de réaction comprenant un dérivé d'urée et résultant de l'étape c) ;
b) de 10 à 50 % en poids, de 10 à 45 % en poids, de 15 à 40 % en poids, de 15 à 35 % en poids, de 15 à 30 % en poids, ou même de 20 à 30 % en poids, de l'au moins un prépolymère durcissable à l'humidité ; et
c) éventuellement, de 10 à 50 % en poids, de 10 à 45 % en poids, de 15 à 40 % en poids, de 15 à 35 % en poids, de 15 à 30 % en poids, ou même de 20 à 30 % en poids, de charges particulaires, en particulier de charges inorganiques particulaires.
